Europäisches Patentamt

European Patent Office

Office européen des brevets

(11) Veröffentlichungsnummer: **0 440 075 A2**

## EUROPÄISCHE PATENTANMELDUNG

(21) Anmeldenummer: 91100778.9

(51) Int. Cl.⁵: **G02B 5/04, G02B 27/08**

(22) Anmeldetag: 22.01.91

(30) Priorität: 31.01.90 DE 4002819

(43) Veröffentlichungstag der Anmeldung:
07.08.91 Patentblatt 91/32

(84) Benannte Vertragsstaaten:
AT BE CH DE ES FR GB IT LI LU NL SE

(71) Anmelder: D. Swarovski & Co.
Postfach 15 Swarovskistrasse 36

A-6112 Wattens/Tirol(AT)

(72) Erfinder: Pöll, Martin
Hubertusweg 5A
A-6122 Fritzens(AT)

(74) Vertreter: Kador & Partner
Corneliusstrasse 15
W-8000 München 5(DE)

(54) Glasdekorkörper.

(57) Glasdekorkörper zum Betrachten von Objekten, die auf der Grundfläche des Glasdekorkörpers angeordnet sind, aber im Glas zu schweben scheinen.

FIG.1

## GLASDEKORKÖRPER

Die Erfindung betrifft einen Glasdekorkörper, der sich durch besondere optische Effekte auszeichnet.

Dekorkörper aus Glas und anderen Materialien zum Aufstellen, beispielsweise auf dem Schreibtisch, sind in vielen Ausführungsformen bekannt. Es besteht jedoch immer ein Bedarf nach neuen Dekorationselementen, insbesondere wenn sie neue, bis daher nicht bekannte Effekte aufweisen.

Aufgabe der Erfindung ist es, einen neuen Glasdekorkörper zu schaffen, der sich durch besondere optische Effekte auszeichnet.

Gegenstand der Erfindung ist ein Glasdekorkörper zum Betrachten von Objekten, auf dessen Grundfläche ein Objekt angeordnet ist, die Betrachtungsfläche der Grundfläche gegenüberliegt, die dem Betrachter zugewandte und zwischen Grundfläche und Betrachtungsfläche liegende Seitenfläche derart zum Betrachter geneigt ist, daß bei einem vorgegebenen Betrachtungswinkelbereich, wobei die Betrachtungsrichtung schräg zur Betrachtungsfläche ist, das gesamte Objekt durch die Betrachtungsfläche sichtbar ist.

Das auf der Grundfläche vorgesehene Objekt ist vorzugsweise nur durch die erste Betrachtungsfläche sichtbar, nicht jedoch durch andere Flächen des Glasdekorkörpers.

Es versteht sich, daß die optischen Effekte sich bei Änderung des Betrachtungwinkels ändern. Zur Beschreibung wird jedoch hier von einem gegebenen Betrachtungswinkel bzw. einer Vorzugsbetrachtungsrichtung ausgegangen, wie sie sich beispielsweise ergibt, wenn der Glasdekorkörper in gewissem Abstand vom Betrachter am Schreibtisch steht und der Betrachter am Schreibtisch sitzt.

Ein erster Vorteil besteht darin, daß der Betrachter das Objekt unter einem steileren Winkel und damit besser sieht als er es sehen würde, wenn sich der Glaskörper nicht über dem Objekt befinden würde. Dies liegt daran, daß das Glas, insbesondere Bleikristallglas, den Lichtstahl zum Lot bricht.

Ein besonderer optischer Effekt ergibt sich dadurch, daß das Objekt, beispielsweise die Uhr, in dem Glasdekorkörper zu schweben scheint, wobei sich die Höhe, in der das Objekt im Glaskörper zu schweben scheint, durch Änderung des Betrachtungswinkels ändert.

Gemäß einer bevorzugten Ausführungsform ist ein zweites Objekt auf einer hinteren Fläche des Glasdekorkörpers angeordnet. Diese ist ebenfalls durch eine zugehörige Betrachtungsfläche sichtbar und vorzugsweise nicht durch die anderen Flächen des Glasdekorkörpers.

Bei diesem zweiten Objekt ergeben sich die gleichen optischen Effekte, nämlich daß das Objekt im Glasdekorkörper zu schweben scheint und sich seine Position mit dem Betrachtungswinkel ändert.

Gemäß einer bevorzugten Ausführungsform ist der Glasdekorkörper so gestaltet, daß bei der Vorzugsbetrachtungsrichtung beide Objekte gleichzeitig und in etwa gleicher Größe zu sehen sind. Dies ist insbesondere dann der Fall, wenn bei gegebenem Betrachtungswinkel die Flächenprojektionen der ersten Betrachtungsfläche und der zweiten Betrachtungsfläche senkrecht zum Sehstrahl in etwa gleich groß sind.

Gemäß einer bevorzugten Ausführungsform liegen die Objekte und die zugehörigen Betrachtungsflächen in parallelen Ebenen.

Eine bevorzugte Ausgestaltung des Glasdekorkörpers ist die Form eines schrägen Vierkantprismas. Der Formenvielfalt sind jedoch keine Grenzen gesetzt. Glasdekorkörper mit Prismenflächen, Pyramidenflächen oder Flächen anderer Raumkörper kommen in Betracht. Auch bezüglich Art und Anzahl der Objekte sind der Phantasie keine Grenzen gesetzt.

Die Erfindung wird nachstehend anhand der Zeichnung, die beispielshafte Ausführungsformen zeigt, näher erläutert.

Es zeigen

Figur 1    eine Ansicht eines Glasdekorkörpers von schräg vorne oben,

Figur 2    eine Seitenschnittansicht des Glasdekorkörpers von Figur 1,

Figur 3    einen pyramidenförmigen Glasdekorkörper in Seitenansicht und

Figur 4    den Glasdekorkörper von Figur 3 in Draufsicht.

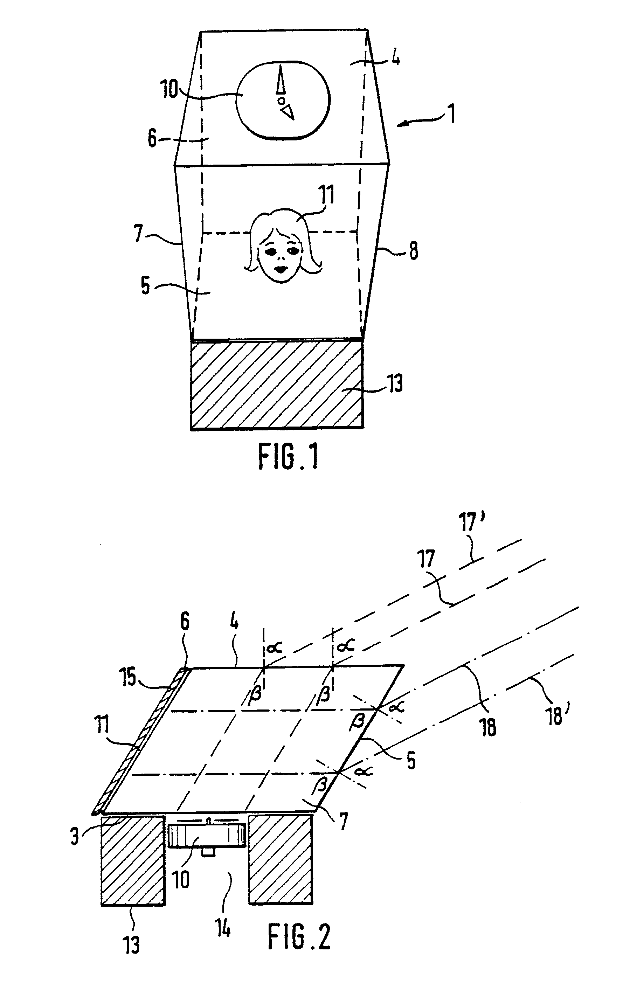

In Figur 1 sieht man entsprechend der Vorzugsbetrachtungsrichtung von schräg vorne oben durch die erste Betrachtungsfläche 4 das erste Objekt 10. Das Objekt 10 ist in diesem Fall eine Uhr, ein Objekt, das für die erfindungsgemäßen Glasdekorkörper besonders geeignet ist. Die Uhr 10 ist im Sockel 13 untergebracht, und zwar in der Bohrung 14, wie dies aus Figur 2 zu ersehen ist. Die Uhr ist von unten gut bedienbar.

Durch die zweite Betrachtungsfläche 5 ist ein zweites Objekt 11 zu sehen, das sich auf der Hinterfläche 6 des Glasdekorkörpers befindet. Dieses zweite Objekt kann beispielsweise ein Bild oder eine Photographie sein, die in einer Halteeinrichtung 15 auf der hinteren Fläche 6 angeordnet ist. Auf diese Weise wird eine Austauschmöglichkeit geschaffen.

Bei Betrachtung des Glasdekorkörpers in etwa in Vorzugsbetrachtungsrichtung, wie dies exemplarisch durch die Lichtstrahlen 17, 17' und 18, 18' gezeigt ist, sieht der Betrachter beide Objekte 10 und 11 gleichzeitig, wobei beide Objekte im Glaskörper zu schweben scheinen.

Die gezeichneten Sehstrahlen 17, 17' dokumentieren auch, warum der Betrachter das erste Objekt 10 durch den Glasdekorkörper 1 besser sieht als ohne Glasdekorkörper, nämlich aufgrund der Tatsache, daß die Lichtstrahlen durch das Bleikristallglas zum Lot gebrochen werden, und somit der Betrachtungwinkel steiler wird.

Auf dieser Gesetzmäßigkeit beruht auch die Form des Glasdekorkörpers. Da das gesamte erste Objekt 10 bei Vorzugsbetrachtungsrichtung vom Betrachter gesehen werden soll, ist es notwendig, die zugehörige erste Betrachtungsfläche 4 des Glasdekorkörpers 1 um einen Abstand zum Betrachter hin verschoben anzuordnen, d.h. die dem Betrachter zugewandte und zwischen Grundfläche 3 und Betrachtungsfläche 4 liegende Seitenfläche 5 ist zum Betrachter geneigt. Dies ersieht man gut bei Betrachtung der Sehstrahlen 17, 17' in Figur 2. Erkennbar hängt dieser Abstand vom Brechungsindex des Glases und somit von den Winkeln α und β ab sowie von der Entfernung des ersten Objektes 10 von der zugehörigen ersten Betrachtungsfläche 4.

Gemäß einer bevorzugten Ausführungsform ist der erfindungsgemäße Glasdekorkörper als schräges Vierkantprisma ausgebildet, wie es in den Figuren gezeigt ist. Dabei sind die Prismenwinkel vorzugsweise so bemessen, daß über den gesamten Bereich der Objektebenen, nämlich der Grundfläche 3 und der hinteren Fläche 6 der Einfallswinkel der Sehstrahlen kleiner als der Grenzwinkel der Totalreflexion ist. Die Objekte 10 und 11 sind dann durch die Betrachtungsflächen 4 und 5 auch dann sichtbar, wenn sie nicht in optischem Kontakt mit den Prismenflächen stehen, sondern von diesen einen Luftabstand haben.

Ist die Brechzahl des Glases des Glasdekorkörpers größer als $\sqrt{2}$, so tritt bei Betrachtung durch die Seitenflächen 7, 8 an der Grundfläche 3 und der hinteren Fläche 6 stets Totalreflexion auf, so daß die in einem Abstand von den Flächen sich befindenden Objekte 10, 11 durch die Seitenflächen 7, 8 einer Betrachtung nicht zugänglich sind.

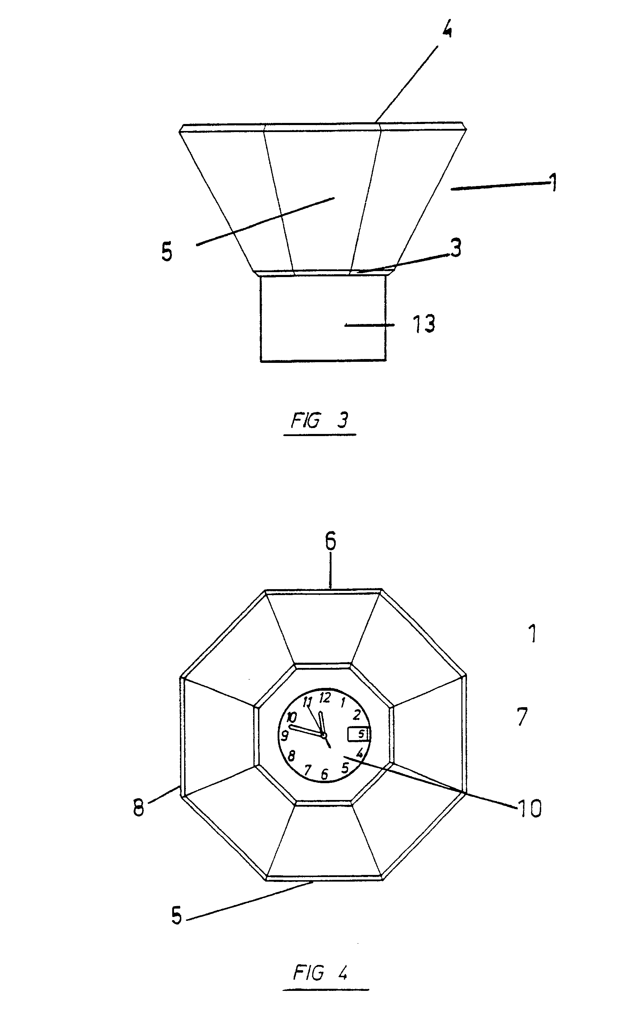

Die Figuren 3 und 4 zeigen einen pyramidenförmigen Glasdekorkörper 1. Auf der Grundfläche 3 ist in einem Sockel 13 ein Objekt 10, beispielsweise eine Uhr, angeordnet. Die Betrachtungsfläche 4 ist parallel zur Grundfläche 3. Die Seitenfläche 5 ist zum Betrachter hin geneigt. Auf der gegenüberliegenden hinteren Seitenfläche 6 kann ein zweites Objekt 11 (nicht gezeigt) angeordnet sein. Es kommt auch in Betracht, auf weiteren Seitenflächen 7, 8 weitere Objekte 12 (nicht gezeigt) anzuordnen.

Die erfindungsgemäßen Glasdekorkörper können verschiedenste Formen aufweisen. Es wird jedoch bevorzugt, daß die Objektflächen und Betrachtungsflächen in parallelen Ebenen liegen.

Für viele Objekte, wie beispiesweise eine Uhr, wird es vorgezogen, auf der Grundfläche einen Sockel vorzusehen, in dem das Objekt angeordnet werden kann.

Die Objekte können auswechselbar sein.

Als Material für den Glasdekorkörper wird Bleikristallglas bevorzugt, das geschliffen und poliert ist.

**Patentansprüche**

1. Glasdekorkörper zum Betrachten von Objekten, auf dessen Grundfläche (3) ein Objekt (10) angeordnet ist, die Betrachtungsfläche (4) der Grundfläche (3) gegenüberliegt, die dem Betrachter zugewandte und zwischen Grundfläche (3) und Betrachtungsfläche (4) liegende Seitenfläche (5) derart zum Betrachter geneigt ist, daß bei einem vorgegebenen Betrachtungswinkelbereich, wobei die Betrachtungsrichtung schräg zur Betrachtungsfläche (4) ist, das gesamte Objekt (10) durch die Betrachtungsfläche (4) sichtbar ist.

2. Glasdekorkörper nach Anspruch 1, **dadurch gekennzeichnet**, daß das Objekt (10) und die Betrachtungsfläche (4) in parallelen Ebenen liegen.

3. Glasdekorkörper nach Anspruch 1 oder 2, **dadurch gekennzeichnet**, daß das Objekt (10) in einem Sockel (13) unter der Grundfläche (3) des Glasdekorkörpers (1) angeordnet ist.

4. Glasdekorkörper nach einem der Ansprüche 1 bis 3, **dadurch gekennzeichnet**, daß ein zweites Objekt (11) auf der hinteren Seitenfläche (6) angeordnet ist.

5. Glasdekorkörper nach einem der Ansprüche 1 bis 4, **dadurch gekennzeichnet**, daß das zweite Objekt (11) und die zugehörige zweite Betrachtungsfläche (5) in parallelen Ebenen liegen.

6. Glasdekorkörper nach einem der Ansprüche 1 bis 5, **dadurch gekennzeichnet**, daß die Objekte (10, 11) auswechselbar angeordnet sind.

7. Glasdekorkörper nach einem der Ansprüche 1 bis 6, **dadurch gekennzeichnet**, daß der Glasdekorkörper (1) die Form eines schrägen Vierkantprismas aufweist.

8. Glasdekorkörper nach einem der Ansprüche 1 bis 7, **dadurch gekennzeichnet**, daß bei gegebenem Betrachtungswinkel die Flächenprojektionen der ersten Betrachtungsfläche (4) und der zweiten Betrachtungsfläche (5) senkrecht zum Sehstrahl gleich groß ist.

9. Glasdekorkörper nach einem der Ansprüche 1 bis 6, **dadurch gekennzeichnet**, daß der Glasdekorkörper (1) die Form eines umgekehrten Pyramidenstumpfes aufweist.

10. Glasdekorkörper nach einem der Ansprüche 1 bis 9, **dadurch gekennzeichnet**, daß der Glasdekorkörper (1) aus geschliffenem Bleikristallglas besteht.

FIG.1

FIG.2

FIG 3

FIG 4